(19) **Europäisches Patentamt**
**European Patent Office**
**Office européen des brevets**

(11) **EP 4 179 289 B1**

(12) **EUROPEAN PATENT SPECIFICATION**

(45) Date of publication and mention
of the grant of the patent:
**11.12.2024 Bulletin 2024/50**

(21) Application number: **20750034.9**

(22) Date of filing: **08.07.2020**

(51) International Patent Classification (IPC):
**G01N 9/00** *(2006.01)* **G01N 11/16** *(2006.01)*

(52) Cooperative Patent Classification (CPC):
**G01N 11/16; G01N 9/002;** G01N 2009/006

(86) International application number:
**PCT/US2020/041112**

(87) International publication number:
**WO 2022/010463 (13.01.2022 Gazette 2022/02)**

(54) **METHOD AND APPARATUS FOR CALCULATING A VIBRATORY METER Q**

VERFAHREN UND VORRICHTUNG ZUR BERECHNUNG EINES VIBRATIONSMESSERS Q

PROCÉDÉ ET APPAREIL DE CALCUL DE VALEUR DE Q DE COMPTEUR VIBRATOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.05.2023 Bulletin 2023/20**

(73) Proprietor: **Micro Motion, Inc.
Boulder, CO 80301 (US)**

(72) Inventors:
• **MACDONALD, George Alexander
Wokingham Berkshire RG41 5SN (GB)**

• **KRAVITZ, Andrew S.
Frederick, Colorado 80504 (US)**

(74) Representative: **Ellis, Christopher Paul
Ollila Law Limited
Unit 7 The Courtyard
Timothys Bridge Road
Stratford upon Avon CV37 9NP (GB)**

(56) References cited:
**WO-A1-2020/122901 US-A1- 2015 204 769
US-A1- 2017 336 309**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 179 289 B1

**Description**

TECHNICAL FIELD

The embodiments described below relate to vibratory meters and, more particularly, to density and viscosity meters.

BACKGROUND

Vibrating meters, including densitometers and viscometers, are important tools used to measure a density or a viscosity of a fluid. Vibrating meters may comprise a vibrating element, such as a fork, a cylinder, or a planar resonator, etc. that is exposed to a fluid under test. One example of a vibrating meter comprises a cylinder cantilever mounted with an inlet end coupled to an existing pipeline or other structure and the outlet end free to vibrate. The member can be vibrated at resonance and the resonant response frequency can be measured. The density of the fluid under test can be determined by measuring the reduced response frequency of the vibrating element. According to well-known principles, the resonant frequency of the vibrating element will vary inversely with the density of the fluid that contacts the conduit.

Viscosity is a fluid characteristic that describes flow resistance. A common definition of viscosity is a measure of the internal friction of a fluid. In particular, this internal friction becomes apparent when a layer of fluid is made to move in relation to another layer. Thus, viscosity is often described as the resistance experienced by one portion of a material moving over another portion of that material. Viscosity is commonly used to characterize petroleum fluids, such as fuels, oils, and lubricants, and often they are specified in the trading and classification of petroleum products. For example, kinematic viscosity for petroleum products is commonly measured in a capillary viscometer by a standard method such as that described by the American Society for Testing and Materials (ASTM) D445 standard. Such measurements involve measuring the time for a fixed amount of liquid to flow under gravity through a calibrated glass capillary under a repeatable force at a given temperature. The capillary tube viscometer has been principally defined by the Hagen-Poiseuille Equation. In a Newtonian fluid, the shear stress is proportional to the shear rate, and the proportionality constant is called the viscosity.

Meters that utilize mechanical resonators, such as vibratory tuning forks, may derive viscosity by balancing the Navier Stokes equation and Newton's Laws of Motion, yielding an equation of the form:

$$\mu = A + \frac{B}{Q^2} \times \frac{1}{\rho \times \omega_o^3} \qquad (1)$$

Where $\mu$ is the fluid viscosity, $\rho$ is the fluid density, $\omega_0$ is the angular resonant frequency undamped ($2\pi f_0$), A is a constant relating to the Q of the resonator in vacuum, and B is a constant relating to the stiffness, mass and geometry of the sensor. The Q is a dimensionless parameter that describes how underdamped an oscillator or resonator is.

The density and resonant frequency are related by an equation of the form:

$$\rho = C + \frac{D}{f^2} \qquad (2)$$

Where C and D are constants relating to the stiffness, mass and geometry of the resonator thus giving:

$$\mu = A + \frac{B}{Q^2} \times \frac{1}{\left(C + \frac{D}{f^2}\right) \times (2\pi f_0)^3} \qquad (3)$$

For simplicity the resonant frequency can be regarded as the same as $f_0$, which is the undamped resonant frequency. For many practical applications a viscosity sensor would be calibrated on similar fluids to those measured in the field, and hence the frequency would be unchanged, so the frequency can be regarded as a constant, and hence the equation can take a form similar to the following:

$$\mu = A + \frac{E}{Q^2} \qquad (4)$$

Where E is essentially a constant based upon the stiffness, mass and geometry of the sensor and the nominal resonant frequency. The equations provided are provided as non-limiting examples.

The principle of using a vibrating sensor for measurement of liquid viscosity is well known. An example of which is the Micro Motion Fork Viscosity Meter (FVM) that is based upon the vibrating-element principle whereby the resonant properties are influenced by the density and viscosity of the fluid. The FVM utilizes this operational principle to determine liquid viscosity. In particular, viscosity is determined by measuring the quality factor (Q) of the resonance and hence damping of the resonator. For example, without limitation, *Equation* 5 describes one possible method for determining viscosity:

$$\text{Viscosity} = V_0 + V_2/Q^2 \tag{5}$$

Where:

$V_0$ and $V_2$ are calibration constants.

Q may be measured as resonance frequency divided by bandwidth as shown:

$$Q = \frac{f0}{(f1-f2)} \tag{6}$$

Where: $f0 = \frac{(f1+f2)}{2}$   The geometric Q may be calculated as:

$$Q = 1 \Big/ \left[ \left(\frac{T_A}{T_B}\right)^{0.5} - \left(\frac{T_B}{T_A}\right)^{0.5} \right] \tag{7}$$

Where:

$T_A$ is the time point of the leading 3dB bandwidth measurement point

$T_B$ is the time point of the trailing 3dB bandwidth measurement point

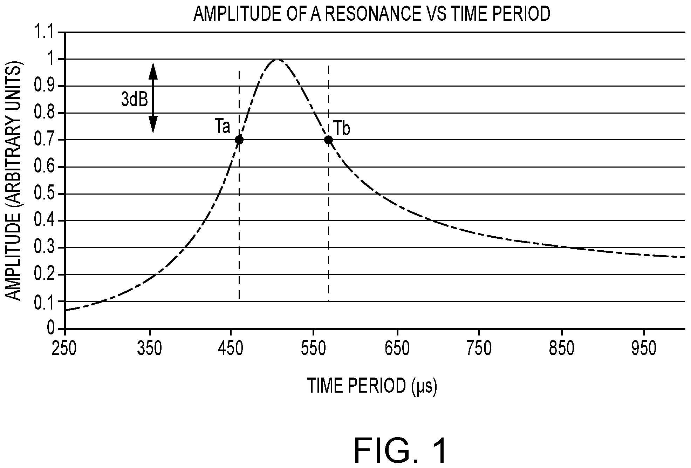

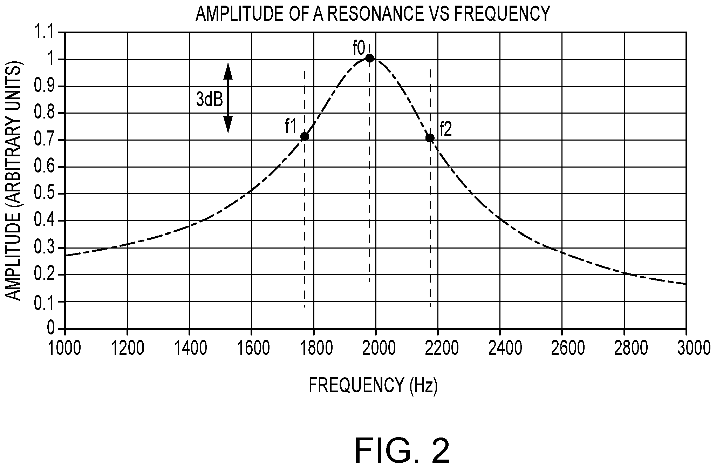

**FIG. 1** graphically illustrates 3dB time points $T_A$ and $T_B$ in terms of time period. **FIG. 2** graphically illustrates 3dB time points $F_1$, $F_0$, and $F_2$ in terms of frequency.

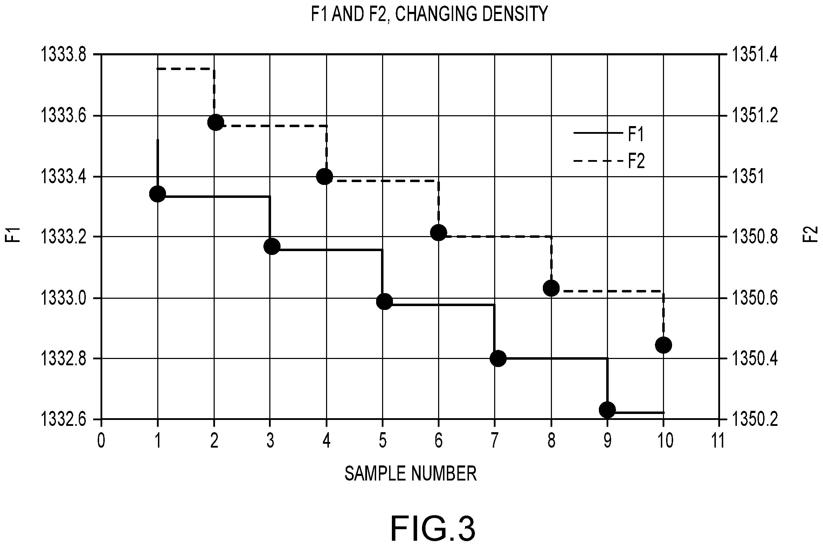

One drawback of the method of alternately measuring the leading and trailing 3dB points is that the measurement at point B is not taken at the same time as the measurement at point A. Therefore, if the fluid density is changing, then erroneous Q measurements are made. This is illustrated in **FIG. 3** in terms of frequency. It will be evident that $F_1$ is updated on the odd sample numbers and $F_2$ is updated on the even sample numbers. The Q is calculated every cycle using the latest value of $F_1$ and $F_2$, so either $F_1$ or $F_2$ will be one cycle out of date, and in this case the calculated Q will oscillate high and low even though the bandwidth and hence Q should be relatively constant.

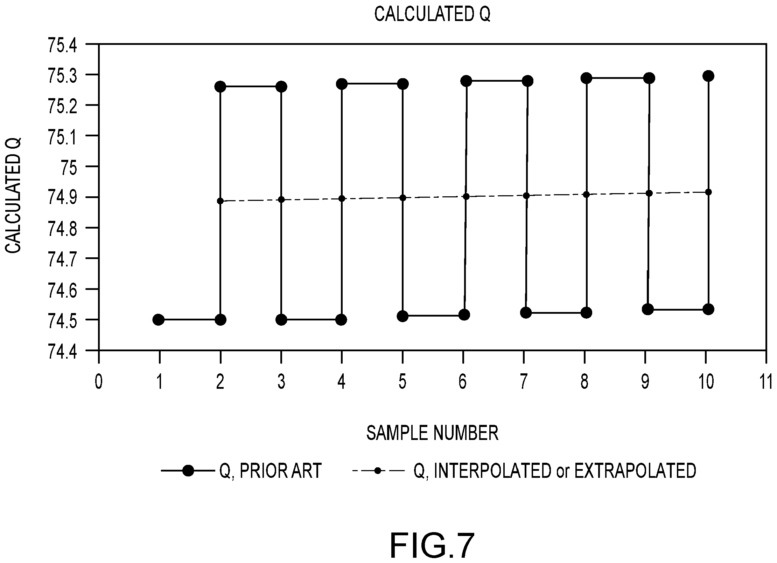

Q is very sensitive to changes in frequency or time period which is why there is a need for an improved method. Turning again to FIG. 3, for example, the frequency is nominally 1350Hz and the change in frequency is around 0.09Hz per sample. Although the frequency drift is very small, the resulting oscillation on the Q measurement is 1% per sample (see FIG. 7). That is to say that the effect on Q is >100 times larger than the underlying frequency drift. This drift could be the result of a steady change in fluid composition or it could arise from a change in temperature.

US2017/336309 discloses a vibratory viscometer.

The present embodiments relate to apparatuses and methods for obtaining readings for $F_1$ and $F_2$ which correspond to the same moment in time such that even if the fluid density is changing, the Q measurement is far more accurate.

SUMMARY

A vibrating meter operable to determine at least one of a viscosity and a density of a fluid therein is provided according to an embodiment. The vibrating meter comprises a driver and a vibrating element vibratable by the driver, and operable to be in contact with the fluid. A vibrating sensor is configured to detect a vibrational response of the vibrating element. Meter electronics are configured to send an excitation signal to the driver and to receive the vibrational response, and are further configured to measure a first vibrational response point and a calculate second vibrational response point of the vibrational response, wherein the second vibrational response point is one of interpolated and extrapolated from other measured response points, and wherein meter electronics is further configured to calculate a Q of the vibrating element using the first vibrational response point and the second vibrational response point.

A method of determining a viscosity or a density of a fluid using a vibrating meter is provided according to an embodiment. The method comprises sending an excitation signal to a driver and driving a vibrating element with the driver. Vibrations of the vibrating element are detected. A first vibrational response point of the vibrational response is measured. A second vibrational response point of the vibrational response is calculated, wherein the second vibrational response point is one of interpolated and extrapolated from other measured response points. A Q of the vibrating element is calculated using the first vibrational response point and the second vibrational response point.

ASPECTS

According to an aspect, a vibrating meter is operable to determine at least one of a viscosity and a density of a fluid therein. The vibrating meter comprises a driver and a vibrating element vibratable by the driver, and operable to be in contact with the fluid. A vibrating sensor is configured to detect a vibrational response of the vibrating element. Meter electronics are configured to send an excitation signal to the driver and to receive the vibrational response, and are further configured to measure a first vibrational response point and a calculate second vibrational response point of the vibrational response, wherein the second vibrational response point is one of interpolated and extrapolated from other measured response points, and wherein meter electronics is further configured to calculate a Q of the vibrating element using the first vibrational response point and the second vibrational response point.

Preferably, the meter electronics is configured to determine a viscosity of the fluid using the Q.

Preferably, the first vibrational response point comprises one of a leading 3dB bandwidth measurement point and a trailing 3dB bandwidth measurement point, and the second vibrational response comprises one of a leading 3dB bandwidth measurement point and a trailing 3dB bandwidth measurement point, and the second vibrational response point is different from the first vibrational response point.

Preferably, the first and second vibrational response points comprise a frequency.

Preferably, the first and second vibrational response points comprise a time period.

Preferably, the vibrating element is cantilevered.

The first vibrational response point and the second vibrational response point of the vibrational response correspond to the same moment in time.

Preferably, the other measured response points comprise at least two points.

According to an aspect, a method of determining a viscosity or a density of a fluid using a vibrating meter is provided. The method comprises sending an excitation signal to a driver and driving a vibrating element with the driver. Vibrations of the vibrating element are detected. A first vibrational response point of the vibrational response is measured. A second vibrational response point of the vibrational response is calculated, wherein the second vibrational response point is one of interpolated and extrapolated from other measured response points. A Q of the vibrating element is calculated using the first vibrational response point and the second vibrational response point.

Preferably, the method comprises the step of determining a viscosity of the fluid using the Q.

Preferably, the first vibrational response point comprises one of a leading 3dB bandwidth measurement point and a trailing 3dB bandwidth measurement point, and the second vibrational response comprises one of a leading 3dB bandwidth measurement point and a trailing 3dB bandwidth measurement point, and the second vibrational response point is different from the first vibrational response point.

Preferably, the first and second vibrational response points comprise a frequency.

Preferably, the first and second vibrational response points comprise a time period.

The first vibrational response point and the second vibrational response point of the vibrational response correspond to the same moment in time.

Preferably, the other measured response points comprise at least two points.

BRIEF DESCRIPTION OF THE DRAWINGS

The same reference number represents the same element on all drawings. It should be understood that the drawings are not necessarily to scale.

FIG. 1 illustrates 3dB time points $T_A$ and $T_B$ in time period terms;
FIG. 2 illustrates 3dB time points $F_1$ and $F_2$ in frequency terms;
FIG. 3 illustrates prior art measurement of 3dB points related to Q calculations;
FIG. 4 illustrates a vibrating meter;

FIG. 5 illustrates measurement of 3dB points related to Q calculations according to an embodiment;

FIG. 6 illustrates measurement of 3dB points related to Q calculations according to an alternate embodiment;

FIG. 7 illustrates a comparison of prior art measured Q over time versus measured Q according to embodiments;

FIG. 8 illustrates meter electronics according to an embodiment; and

FIG. 9 illustrates a method of calculating Q according to an embodiment.

DETAILED DESCRIPTION

Figures 1 - 9 and the following description depict specific examples to teach those skilled in the art how to make and use the best mode of embodiments of a vibrating meter. For the purpose of teaching inventive principles, some conventional aspects have been simplified or omitted. Those skilled in the art will appreciate variations from these examples that fall within the scope of the present description. Those skilled in the art will appreciate that the features described below may be combined in various ways to form multiple variations of the vibrating meter. As a result, the embodiments described below are not limited to the specific examples described below, but only by the claims and their equivalents.

The embodiments provided relate to densitometers and viscometers and related methods for accurately calculating Q measurements of vibratory members. In particular, readings for the leading 3dB bandwidth measurement point ($T_A$) and trailing 3dB bandwidth measurement point ($T_B$) are utilized in Q measurement calculations which correspond to the same moment so that even if the fluid density is changing, the Q measurement remains accurate.

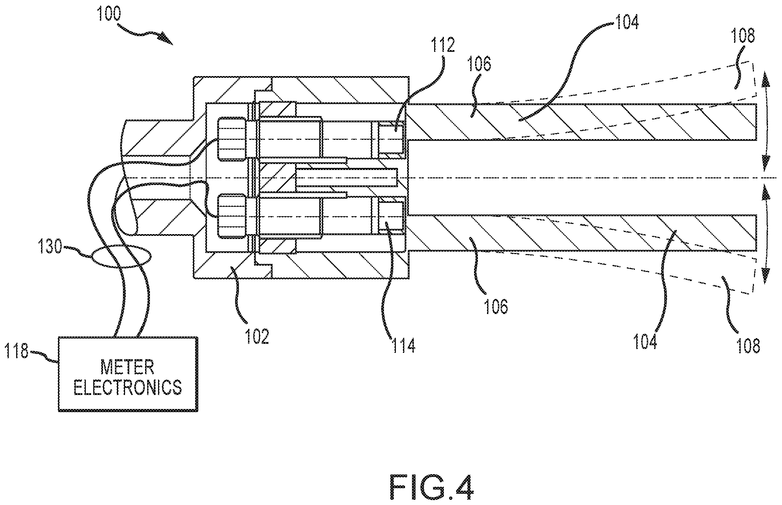

**FIG. 4** depicts a vibrating meter 100. The vibrating meter 100 may be configured to measure a density and/or viscosity of a fluid, such as a liquid or a gas, for example. Vibrating meter 100 includes a housing 102 with a vibrating element 104 located at least partially within the housing 102. Housing 102 helps to retain the fluid pressure as vibrating element 104 oscillates. A portion of housing 102 is cut away. In examples, vibrating meter 100 may be placed in-line in an existing pipeline. In further examples, however, the housing 102 may comprise closed ends with apertures to receive a fluid sample. In many instances, the housing 102 or vibrating element 104 may include flanges or other members for operatively coupling vibrating meter 100 to a pipeline or similar fluid delivering device in a fluid-tight manner. In the example of vibrating meter 100, vibrating element 104 is cantilever mounted to housing 102 at first end 106. Vibrating element 104 is free to vibrate at a second end 108.

The example vibrating meter 100 is immersive, meaning that the fluid under measurement is found all around vibrating element 104. The vibrating element 104 may take the form of a tube, sheet, modified sheet, fork (as illustrated), rod, or any other shape known in the art. The vibrating element 104 may be affixed at one or both ends, and may be cantilevered in some embodiments, such as that illustrated. According to the example shown, the vibrating element 104 may include a plurality of fluid apertures (not shown) near the first end 106. The fluid apertures can be provided to allow some of the fluid entering the vibrating meter 100 to flow between the housing 102 and the vibrating element 104. In other examples, apertures may be provided in the housing 102 to expose the fluid under test to the outer surface of the vibrating element 104. In further examples, however, fluid may enter the vibrating meter through channels in the metal work near the first end 106.

Further shown in FIG. 4 is a driver 112 and a vibrating sensor 114 positioned within a cylinder 116. The driver 112 and vibrating sensor 114 may comprise coils, but other implementations are also possible, such as piezo sensors, optical sensors, strain gages, etc. If an electric current is provided to the coil, a magnetic field is induced in the vibrating element 104 causing the vibrating element 104 to vibrate. Conversely, the vibration of the vibrating element 104 induces a voltage in the vibrating sensor 114. The driver 112 receives a drive signal from a meter electronics 118 in order to vibrate the vibrating element 104 at one of its resonant frequencies in one of a plurality of vibration modes, including for example simple bending, torsional, radial, or coupled type. The vibrating sensor 114 detects the vibration of the vibrating element 104, including the frequency at which the vibrating element 104 is vibrating and sends the vibration information to the meter electronics 118 for processing. As the vibrating element 104 vibrates, the fluid contacting the vibrating element's wall, and the fluid a short distance from the cylinder will vibrate along with the vibrating element 104. The added mass of the fluid contacting the vibrating element 104 lowers the resonant frequency. The new, lower, resonant frequency of the vibrating element 104 is used to determine the density of the fluid. The resonance response, or the quality factor, may also be used to determine the viscosity of the fluid. If a fluid under test is present, the Q of the vibrating element 104 will change inversely proportionally to the fluid viscosity.

In embodiments, a first frequency response point and a second frequency response point are measured for use in Q calculations. Alternatively, first and second time points are measured. Turning to **FIGS. 3** and **4**, in embodiments, readings of a frequency response of the vibrating element 104 for at least one of the leading 3dB bandwidth measurement point ($F_1$) and trailing 3dB bandwidth measurement point ($F_2$) is to fit a straight line, such that two values are used from the same time period. Such values may be consecutive, as illustrated, or non-consecutive. Such readings are computed by the meter electronics 118. It should be noted that either time period or frequency may be utilized in relation to 3dB bandwidth measurement points.

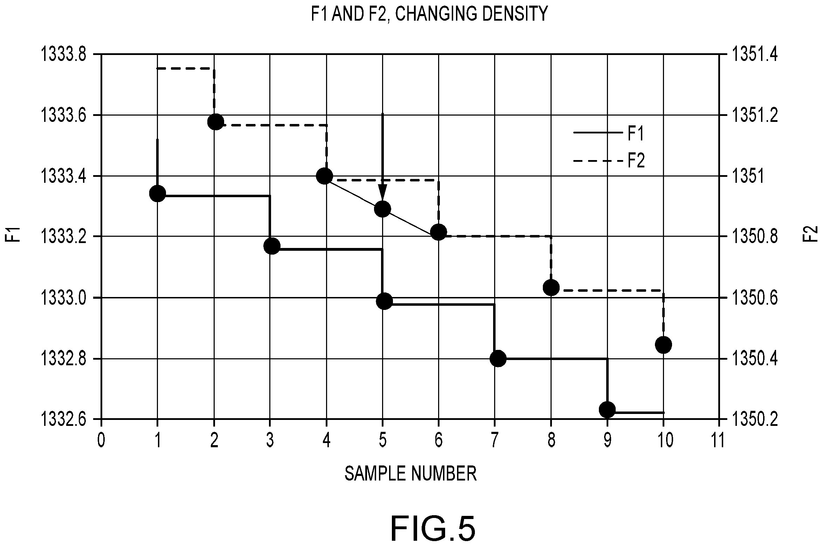

In **FIG. 5**, it is illustrated by example that the $F_1$ value is interpolated between points of actual measurement. In this case, a value is interpolated for $F_2$ between sample numbers 4 and 6. It will be clear that this point in time corresponds with the point where $F_1$ is measured-i.e. sample 5. This point corresponds to the arrow shown in FIG. 5. The interpolated $F_2$ value is then utilized in conjunction with the measured $F_1$ value at the time of $F_1$ value measurement to calculate Q. It should be noted that this is merely an example, and the $F_1$ value could be interpolated, with the $F_2$ measurement being utilized for Q calculations. Furthermore, the sample numbers are also only provided for the purpose of illustrative example, and any sample numbers, consecutive or non-consecutive, may be used.

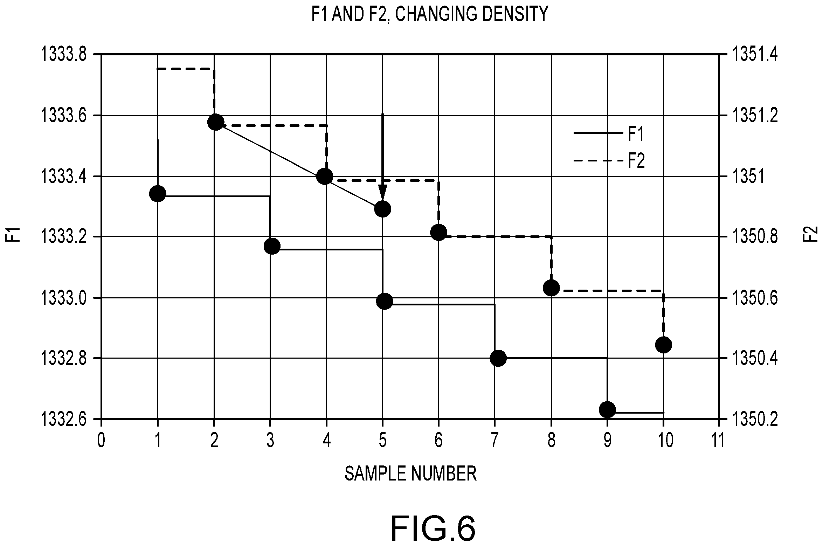

A disadvantage of this approach is that calculations for Q always lag behind the live measurement. An alternative method that does not result in a lag is illustrated in **FIG. 6**. In this embodiment, a line is fit between consecutive $F_2$ measurements at sample number 2 and 4, and then extrapolated to a time point where sample number 5 is taken. This point corresponds to the arrow shown in FIG. 6. It should be noted again that this is merely an example, and the $F_1$ value could be extrapolated, with the $F_2$ measurement being utilized for Q calculations. Furthermore, the sample number is also only provided for the purposes of the example, and any sample numbers, consecutive or non-consecutive, may be used.

In the above examples, only two points are used for calculating an interpolated or extrapolated value. Multiple points, averages, running averages, slope equations or the like, and combinations thereof may also be used for calculating interpolated and/or extrapolated values.

**FIG. 7** illustrates the nature of the calculated Q values over time where density is changing utilizing the offset 3dB bandwidth measurement points that are employed by prior art devices. It will be clear that the measured Q is not stable. Superimposed upon this line is an example of the improved Q value measurement as a result of interpolation or extrapolation, as shown in FIGS. 3 and 4.

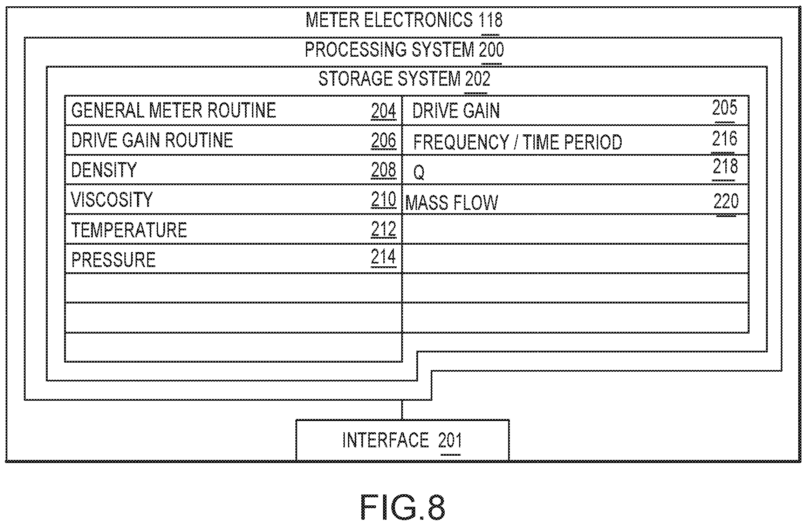

**FIG. 8** is a block diagram of the meter electronics 118 according to an embodiment. In operation, the vibrating meter 100 provides various measurement values that may be outputted including one or more of a measured or averaged value of density, viscosity, and flow rate.

The vibrating meter 100 generates a vibrational response. The vibrational response is received and processed by the meter electronics 118 to generate one or more fluid measurement values. The values can be monitored, recorded, saved, totaled, and/or output.

The meter electronics 118 includes an interface 201, a processing system 200 in communication with the interface 201, and a storage system 202 in communication with the processing system 200. Although these components are shown as distinct blocks, it should be understood that the meter electronics 118 can be comprised of various combinations of integrated and/or discrete components.

The interface 201 may be configured to couple to the leads and exchange signals with the driver 112, vibrating sensors 114, and temperature or pressure sensors (not shown), for example. The interface 201 may be further configured to communicate over a communication path to external devices.

The processing system 200 can comprise any manner of processing system. The processing system 200 is configured to retrieve and execute stored routines in order to operate the vibrating meter 100. The storage system 202 can store routines including a general meter routine 204. The storage system 202 can store measurements, received values, working values, and other information. In some embodiments, the storage system stores a mass flow (m) 220, a density ($\rho$) 208, a viscosity ($\mu$) 210, a temperature (T) 212, a pressure 214, a drive gain 205, a frequency and/or time period 216, a Q 218, routines such as the drive gain routine 206 and any other variables or routines known in the art. Other measurement/processing routines are contemplated and are within the scope of the description and claims.

The general meter routine 204 can produce and store fluid quantifications and flow measurements. The general meter routine 204 can generate viscosity measurements and store them in the viscosity 210 storage of the storage system 202, and/or density measurements and store them in the density 208 storage of the storage system 202, for example. The viscosity 210 value may be determined from the Q 218, as previously discussed and as known in the art.

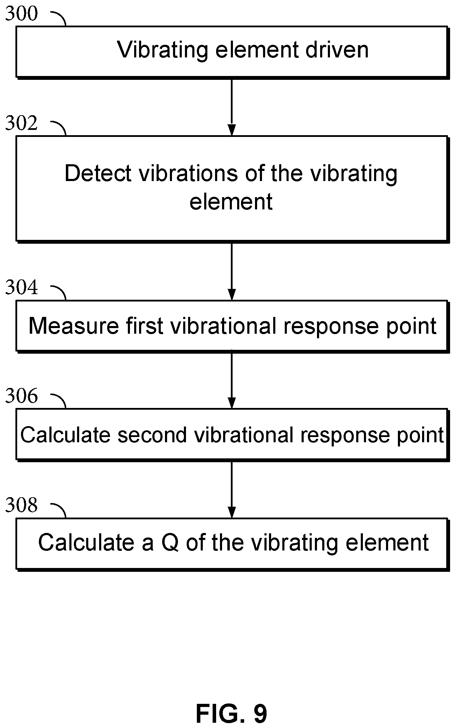

**FIG. 9** depicts a method in accordance with an embodiment. The method begins with step 300. In step 300, a vibrating element 100 is driven to vibrate by the driver 112. An excitation signal that controls the driver 112 is sent from meter electronics 118.

The method continues with step 302. In step 302, the vibrations of the vibrating element 104 are detected.

In step 304, a first vibrational response point of the vibrational response is measured.

In step 306, a second vibrational response point of the vibrational response is calculated. The second vibrational response point is calculated via one of interpolation and extrapolation from other measured response points.

A Q of the vibrating element 104 is calculated in step 308 using the first vibrational response point and the second vibrational response point, as described herein.

**Claims**

1. A vibrating meter (100) operable to determine at least one of a viscosity and a density of a fluid therein, comprising:

 a driver (112);
 a vibrating element (104) vibratable by the driver (112), and operable to be in contact with the fluid;
 a vibrating sensor (114) configured to detect a vibrational response of the vibrating element (104); and
 meter electronics (118) configured to send an excitation signal to the driver (112) and to receive the vibrational response, and further configured to measure a first vibrational response point, the vibrating meter (100) being **characterised in that** the meter electronics (118) is configured to calculate a second vibrational response point of the vibrational response, wherein the second vibrational response point is one of interpolated and extrapolated from other measured response points, and **in that** the meter electronics (118) is further configured to calculate a quality factor Q of the vibrating element (104) using the first vibrational response point and the second vibrational response point, wherein the first vibrational response point and the second vibrational response point of the vibrational response correspond to the same moment in time.

2. The vibrating meter (100) of claim 1, wherein the meter electronics (118) is configured to determine the viscosity of the fluid using the Q.

3. The vibrating meter (100) of claim 1, wherein the first vibrational response point comprises one of a leading 3dB bandwidth measurement point ($F_1$) and a trailing 3dB bandwidth measurement point ($F_2$), and the second vibrational response comprises one of a leading 3dB bandwidth measurement point ($F_1$) and a trailing 3dB bandwidth measurement point ($F_2$), and the second vibrational response point is different from the first vibrational response point.

4. The vibrating meter (100) of claim 3, wherein the first and second vibrational response points comprise a frequency.

5. The vibrating meter (100) of claim 1, wherein the vibrating element (104) is cantilevered.

6. The vibrating meter (100) of claim 1, wherein the other measured response points comprise at least two points.

7. A method of determining a viscosity or a density of a fluid using a vibrating meter (100) comprising:

 sending an excitation signal to a driver (112);
 driving a vibrating element (104) with the driver (112);
 detecting vibrations of the vibrating element (104); and
 measuring a first vibrational response point of the vibrational response, the method being **characterised in that** it comprises
 calculating a second vibrational response point of the vibrational response, wherein the second vibrational response point is one of interpolated and extrapolated from other measured response points;
 wherein the first vibrational response point and the second vibrational response point of the vibrational response correspond to the same moment in time; and
 calculating a quality factor Q of the vibrating element (104) using the first vibrational response point and the second vibrational response point.

8. The method of claim 7, comprising the step of determining the viscosity of the fluid using the Q.

9. The method of claim 7, wherein the first vibrational response point comprises one of a leading 3dB bandwidth measurement point ($F_1$) and a trailing 3dB bandwidth measurement point ($F_2$), and the second vibrational response comprises one of a leading 3dB bandwidth measurement point ($F_1$) and a trailing 3dB bandwidth measurement point ($F_2$), and the second vibrational response sample point is different from the first vibrational response sample point.

10. The method of claim 7, wherein the first and second vibrational response points comprise a frequency.

11. The method of claim 7, wherein the other measured response points comprise at least two points.

**Patentansprüche**

1. System (600, 700) zum Bestimmen eines Nicht-Viskositäts-Korrelationsparameters zum Korrigieren einer gemessenen Strömungsrate für Viskositätseffekte eines Fluids in einem Schwingungsmesser (5), wobei das System Folgendes umfasst:

   eine Sensoranordnung (10); und
   eine Messelektronik (20), die mit der Sensoranordnung (10) kommunikativ gekoppelt ist, wobei die Messelektronik (20) für Folgendes konfiguriert ist:

   Empfangen von Sensorsignale von der Sensoranordnung (10);
   Bestimmen eines Nicht-Viskositäts-Korrelationsparameters basierend auf den Sensorsignalen,

   wobei das System **dadurch gekennzeichnet ist, dass** der Nicht-Viskositäts-Korrelationsparameter ein Verhältnis von Fluidgeschwindigkeit zu Massenströmungsrate oder ein Schwingungsfrequenzverhältnis umfasst.

2. System (600, 700) nach Anspruch 1, wobei die Messelektronik (20) ferner so konfiguriert ist, dass sie den Nicht-Viskositäts-Korrelationsparameter mit einer Viskosität eines Fluids in der Sensoranordnung (10) korreliert.

3. System (600, 700) nach Anspruch 2, wobei die Messelektronik (20) ferner so konfiguriert ist, dass sie den Nicht-Viskositäts-Korrelationsparameter mit einer Viskosität von einem oder mehreren, vorzugsweise zwei oder mehreren Fluiden korreliert.

4. System (600, 700) nach Anspruch 2 oder 3 wobei die Messelektronik (20) ferner dafür konfiguriert ist, eine Fluidströmungsrate zu bestimmen; und die Fluidströmungsrate auf Basis des Nicht-Viskositäts-Korrelationsparameters zu korrigieren, wobei der genannte Nicht-Viskositäts-Korrelationsparameter mit einem Viskositätswert korreliert ist.

5. System (600, 700) nach Anspruch 2, wobei die Messelektronik (20) ferner so konfiguriert ist, dass sie den Nicht-Viskositäts-Korrelationsparameter mit einem Fehlerprozentsatz einer Fluidströmungsrate des Fluids in der Sensoranordnung (10) korreliert.

6. System (600, 700) nach einem der vorstehenden Ansprüche 1 bis 5, das ferner ein Viskosimeter (610, 710) umfasst, das mit der Messelektronik (20) durch Kommunikation gekoppelt ist, wobei das genannte Viskosimeter (610, 710) dafür konfiguriert ist, die Viskosität des Fluids zu messen und die gemessene Viskosität an die Messelektronik (20) zu liefern.

7. Verfahren zum Bestimmen eines Nicht-Viskositäts-Korrelationsparameters zum Korrigieren einer gemessenen Strömungsrate für Viskositätseffekte eines Fluids in einem Schwingungsmesser, wobei das Verfahren Folgendes umfasst:

   Empfangen von Sensorsignalen von einer Sensoranordnung;
   Bestimmen eines Nicht-Viskositäts-Korrelationsparameters basierend auf den Sensorsignalen,
   wobei das Verfahren **dadurch gekennzeichnet ist, dass** der Nicht-Viskositäts-Korrelationsparameter ein Verhältnis von Fluidgeschwindigkeit zu Massenströmungsrate oder eine Schwingungsfrequenz umfasst.

8. Verfahren nach Anspruch 7, das ferner das Korrelieren des Nicht-Viskositäts-Korrelationsparameters mit einer Viskosität eines Fluids in der Sensoranordnung (10) umfasst.

9. Verfahren nach Anspruch 8, das ferner das Korrelieren des Nicht-Viskositäts-Korrelationsparameters mit einer Viskosität eines Fluids oder mehrerer, vorzugsweise zwei oder mehrerer Fluide umfasst.

10. Verfahren nach einem der Ansprüche 7 bis 9, das ferner das Bestimmen einer Fluidströmungsrate und das Korrigieren der Fluidströmungsrate basierend auf dem Nicht-Viskositäts-Korrelationsparameter umfasst, wobei der genannte Nicht-Viskositäts-Korrelationsparameter mit einem Viskositätswert korreliert ist.

11. Verfahren nach einem der Ansprüche 7 bis 10, das ferner das Korrelieren des Nicht-Viskositäts-Korrelationsparameters mit einem Fehlerprozentsatz der gemessenen Strömungsrate und das Korrelieren des Fehlerprozentsatzes mit einer Viskosität des Fluids in der Sensoranordnung umfasst.

**Revendications**

1. Système (600, 700) permettant de déterminer un paramètre de corrélation de non-viscosité pour corriger un débit mesuré des effets de viscosité d'un fluide dans un compteur vibratoire (5), le système comprenant :

   un ensemble capteur (10) ; et
   une électronique de comptage (20) couplée en communication à l'ensemble capteur (10), l'électronique de comptage (20) étant configurée pour :

   recevoir des signaux de capteur en provenance de l'ensemble capteur (10) ;
   déterminer un paramètre de corrélation de non-viscosité sur la base des signaux de capteur,

   le système étant **caractérisé en ce que** le paramètre de corrélation de non-viscosité comprend un rapport entre une vitesse et un débit massique d'un fluide ou un rapport entre la fréquence de vibration.

2. Système (600, 700) selon la revendication 1, dans lequel l'électronique de comptage (20) est en outre configurée pour corréler le paramètre de corrélation de non-viscosité à une viscosité d'un fluide dans l'ensemble capteur (10).

3. Système (600, 700) selon la revendication 2, dans lequel l'électronique de comptage (20) est en outre configurée pour corréler le paramètre de corrélation de non-viscosité à une viscosité d'un fluide ou plus, de préférence de deux fluides ou plus.

4. Système (600, 700) selon la revendication 2 ou 3, dans lequel l'électronique de comptage (20) est en outre configurée pour déterminer un débit fluidique ; et pour corriger le débit fluidique sur la base du paramètre de corrélation de non-viscosité, ledit paramètre de corrélation de non-viscosité étant corrélé à une valeur de viscosité.

5. Système (600, 700) selon la revendication 2, dans lequel l'électronique de comptage (20) est en outre configurée pour corréler le paramètre de corrélation de non-viscosité à un pourcentage d'erreur d'un débit fluidique du fluide dans l'ensemble capteur (10).

6. Système (600, 700) selon l'une des revendications précédentes 1 à 5, comprenant en outre un viscosimètre (610, 710) couplé en communication à l'électronique de comptage (20), ledit viscosimètre (610, 710) étant configuré pour mesurer la viscosité du fluide et fournir la viscosité mesurée à l'électronique de comptage (20).

7. Procédé de détermination d'un paramètre de corrélation de non-viscosité pour corriger un débit mesuré des effets de viscosité d'un fluide dans un compteur vibratoire, le procédé consistant à :

   recevoir des signaux de capteur en provenance d'un ensemble capteur ;
   déterminer un paramètre de corrélation de non-viscosité sur la base des signaux de capteur,
   le procédé étant **caractérisé en ce que** le paramètre de corrélation de non-viscosité comprend un rapport entre une vitesse et un débit massique d'un fluide ou une fréquence de vibration.

8. Procédé selon la revendication 7, consistant en outre à corréler le paramètre de corrélation de non-viscosité à une viscosité d'un fluide dans l'ensemble capteur (10).

9. Procédé selon la revendication 8, consistant en outre à corréler le paramètre de corrélation de non-viscosité à une viscosité d'un fluide ou plus, de préférence de deux fluides ou plus.

10. Procédé selon l'une quelconque des revendications 7 à 9, consistant en outre à déterminer un débit fluidique ; et à corriger le débit fluidique sur la base du paramètre de corrélation de non-viscosité, ledit paramètre de corrélation de non-viscosité étant corrélé à une valeur de viscosité.

11. Procédé selon l'une quelconque des revendications 7 à 10, consistant en outre à corréler le paramètre de corrélation de non-viscosité à un pourcentage d'erreur du débit mesuré et à corréler le pourcentage d'erreur à une viscosité du fluide dans l'ensemble capteur.

FIG. 1

AMPLITUDE OF A RESONANCE VS FREQUENCY

FIG. 2

EP 4 179 289 B1

F1 AND F2, CHANGING DENSITY

F2

1351.4
1351.2
1351
1350.8
1350.6
1350.4
1350.2

F1

1333.8
1333.6
1333.4
1333.2
1333.0
1332.8
1332.6

SAMPLE NUMBER

0 1 2 3 4 5 6 7 8 9 10 11

F1
F2

**FIG.3**

FIG.4

EP 4 179 289 B1

F1 AND F2, CHANGING DENSITY

FIG.5

EP 4 179 289 B1

F1 AND F2, CHANGING DENSITY

SAMPLE NUMBER

FIG.6

EP 4 179 289 B1

EP 4 179 289 B1

FIG.7

| METER ELECTRONICS 118 | | | |
|---|---|---|---|
| PROCESSING SYSTEM 200 | | | |
| STORAGE SYSTEM 202 | | | |
| GENERAL METER ROUTINE | 204 | DRIVE GAIN | 205 |
| DRIVE GAIN ROUTINE | 206 | FREQUENCY / TIME PERIOD | 216 |
| DENSITY | 208 | Q | 218 |
| VISCOSITY | 210 | MASS FLOW | 220 |
| TEMPERATURE | 212 | | |
| PRESSURE | 214 | | |
| | | | |
| | | | |
| | | | |

INTERFACE 201

FIG.8

300 ⌐
```
┌─────────────────────────────────────┐
│      Vibrating element driven        │
└─────────────────────────────────────┘
```

302 ⌐
```
┌─────────────────────────────────────┐
│     Detect vibrations of the         │
│         vibrating element            │
└─────────────────────────────────────┘
```

304 ⌐
```
┌─────────────────────────────────────┐
│  Measure first vibrational response  │
│               point                  │
└─────────────────────────────────────┘
```

306 ⌐
```
┌─────────────────────────────────────┐
│ Calculate second vibrational response│
│               point                  │
└─────────────────────────────────────┘
```

308 ⌐
```
┌─────────────────────────────────────┐
│  Calculate a Q of the vibrating      │
│              element                 │
└─────────────────────────────────────┘
```

**FIG. 9**

**EP 4 179 289 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2017336309 A